# EUROPÄISCHE PATENTSCHRIFT

(11) **EP 2 327 202 B1**
(45) Veröffentlichungstag und Bekanntmachung des Hinweises auf die Patenterteilung: **14.11.2018**
(21) Anmeldenummer: 09777527.4
(22) Anmeldetag: 29.07.2009
(51) Int. Cl.: H04M 3/42

(54) **BEREITSTELLEN EINER KOMMUNIKATION ZU EINEM TEILNEHMER MIT MEHREREN ENDGERÄTEN**
PROVIDING COMMUNICATION TO A SUBSCRIBER HAVING A PLURALITY OF TERMINALS
FOURNITURE D UNE COMMUNICATION À UN CORRESPONDANT AU MOYEN DE PLUSIEURS APPAREILS TERMINAUX

(30) Priorität: 04.08.2008 DE 102008036257
(43) Veröffentlichungstag der Anmeldung: 01.06.2011
(73) Patentinhaber: Unify GmbH & Co. KG, 80807 München (DE)
(72) Erfinder: LEDERER, Thomas, 82211 Herrsching (DE)
(74) Vertreter: Fritzsche, Thomas
(86) Internationale Anmeldenummer: PCT/EP2009/005503
(87) Internationale Veröffentlichungsnummer: WO 2010/015353

(56) Entgegenhaltungen:
- EP-A- 1 892 938
- US-A1- 2008 069 332

## Beschreibung

Die Erfindung betrifft ein Verfahren zum Bereitstellen einer Kommunikation gemäß dem Oberbegriff des Anspruchs 1 und ein Kommunikationssystem zum Bereitstellen einer Kommunikation gemäß dem Oberbegriff des Anspruchs 15.

Ein in Kommunikationssystemen bekanntes Problem ist die Nichterreichbarkeit von Teilnehmern. Hierzu sind daher zahlreiche Lösungsmöglichkeiten, wie beispielsweise Rufweiterleitung, Anrufbeantworter, Voice-Boxen oder automatische Benachrichtigungen beispielsweise per Mail oder Mobilfunkkurznachricht. Diese Lösungen haben jedoch den Nachteil, dass es damit häufig dennoch dazu kommt, dass eilige Nachrichten den gewünschten Teilnehmer nicht, insbesondere nicht rechtzeitig, erreichen.

In EP 1 892 938 A2 ist ein Kommunikationsverfahren beschrieben, wobei einem zweiten Telekommunikationsteilnehmer mehrere Netzwerkkennungen zugeordnet sind, über die er in einem Telekommunikationsnetzwerk erreichbar ist, wobei dem zweiten Telekommunikationsteilnehmer zu einer seiner Netzwerkkennungen ein Sprachdialogsystem zugeordnet ist, mittels dem ein erster Telekommunikationsteilnehmer durch Dialog die Vermittlung von einer zunächst angewählten Netzwerkkennung des zweiten Telekommunikationsteilnehmers auf eine andere alternative Netzwerkkennung bewirkt. Das Verfahren weist den Nachteil auf, dass der erste Telekommunikationsteilnehmer zur Auswahl der alternativen Netzwerkkennung mit dem Dialogsystem kommunizieren muss.

Der vorliegenden Erfindung liegt die Aufgabe zugrunde, ein Verfahren und eine Vorrichtung anzugeben, die den vorstehend genannten Nachteil beheben.

Gelöst wird diese Aufgabe durch ein Verfahren mit den Merkmalen des Patentanspruchs 1 und durch ein Kommunikationssystem mit den Merkmalen des Patentanspruchs 15.

Vorteilhafte Ausführungsformen und Weiterbildungen der Erfindung sind in den abhängigen Ansprüchen angegeben.

Bei dem erfindungsgemäßen Verfahren zum Bereitstellen einer Kommunikation, mit einer Vielzahl von Kommunikationsteilnehmern, mit mindestens einer ersten einem ersten Kommunikationsteilnehmer zugeordneten Adressinformation, einer zweiten und mindestens einer dritten einem zumindest einem zweiten Kommunikationsteilnehmer zugeordneten Adressinformation sowie einer vierten einer zentralen Steuerungsfunktion zugeordneten Adressinformation wird bei Scheitern eines durch von einem durch die erste Adressinformation bestimmten Kommunikationsteilnehmer unter Nutzung der zweiten Adressinformation initiierten ersten Verbindungsversuchs zum zweiten Kommunikationsteilnehmer, bei einem dem Scheitern folgenden zweiten Verbindungsversuch vom durch die erste Adressinformation bestimmten ersten Kommunikationsteilnehmer zur durch die vierte Adressinformation bestimmten zentralen Steuerungsfunktion, die Steuerungsfunktion eine Weiterleitung der zweiten Verbindung zum zweiten Kommunikationsteilnehmer unter Nutzung der dritten Adressinformation initiiert.

Hierdurch wird ein einfach zu implementierendes Verfahren geboten, welches es erlaubt die Wahrscheinlichkeit des Erreichens eines Kommunikationspartner, welchem mehrere Kommunikationsendgeräte respektive diesen zugeordnete Rufnummern bzw. gleichwirkenden Adressinformationen, wie VoIP Accounts, Emailadressen und vergleichbare Verbindung zur sprachbasierten (Telefon-/Fax-) Kommunikationsendgeräten, zugeordnet sind, ermöglicht. Für den dringend gesuchten Kontakt wird hierdurch eine technische Lösung geboten, die lediglich die Kenntnis einer (Haupt)-Nummer des gewünschten Kommunikationsteilnehmers sowie einer zentralen Rufnummer erfordert.

Vorzugsweise wird bei einem Scheitern des ersten Verbindungsversuchs eine erste Information derart organisiert gespeichert, dass die erste Adressinformation zur zweiten Adressinformation zugeordnet wird. Hierdurch wird auf einfache Art implementiert nachvollziehbar, wer welchen Teilnehmeranschluss zu erreichen versucht hat. Insbesondere ist diese organisierte Speicherung dann von Vorteil, wenn der Anrufer nicht Teil eines durch private Vermittlungseinrichtungen definierten Teilnehmerfeldes ist, da andernfalls diese Information nicht ohne Weiteres verfügbar wäre.

Des Weiteren wird vorzugsweise die zumindest eine dritte Adressinformation, insbesondere durch die zentrale Steuerungsfunktion, dem zweiten Kommunikationsteilnehmer zugeordnet gespeichert. Hierdurch können alternative Kontaktmöglichkeiten zentral verwaltet werden und das erfindungsgemäße Verfahren seine Wirkung optimal entfalten.

Alternativ oder ergänzend kann bei einer vorteilhaften Weiterbildung der Erfindung die zumindest eine dritte Adressinformation aus einem Adressverzeichnis entnommen werden. Hierdurch wird eine weitere Flexibilität und Nutzerfreundlichkeit erreicht, die sich darin bemerkbar macht, dass Mitglieder des Teilnehmerfeldes nicht mehr (erneut) ihre alternativen Kontaktmöglichkeiten eingeben müssen.

Eine weitere vorteilhafte Weiterbildung des erfindungsgemäßen Verfahrens besteht darin, dass
- mit dem Scheitern des ersten Verbindungsversuchs ein Timer zur Erfassung einer vorbestimmbaren Zeitspanne gestartet wird,
- bei Ablauf des Timers die erste Information gelöscht wird.
Hierdurch wird ein einfaches mit der Dringlichkeit eines Kontaktwunsches korrelierendes Maß implementiert.

Von Vorteil ist dabei auch wenn das Verfahren derart weitergebildet wird, dass
- bei einem weiteren ersten Verbindungsversuch vor Ablauf des Timers, ein Zähler inkrementiert wird,
- eine Prüfung auf Vorhandensein einer weiteren dritten Adressinformation erfolgt,
- im Falle des Vorhandenseins einer weiteren dritten Adressinformation ein weiterer zweiter Verbindungsversuch unter Nutzung der weiteren dritten Adressinformation erfolgt.
Diese Weiterbildung ermöglicht es bei mehr als zwei dem gewünschten Teilnehmer zugeordneten Adressinformationen (private und/oder dienstliche Mobilfunknummer, private Festnetznummer) diese sukzessive einem jeweiligen Verbindungsversuch zugrunde zu legen.

Wird im Falle eines Nichtvorhandenseins der Anruf beendet, so ist gewährleistet, dass die Ressourcen möglichst schnell wieder frei gegeben werden. Zudem ist für den negativen Fall für eine Implementierung ein definierter Zustand für diesen Fall vorgegeben.

Alternativ oder ergänzend ist es von Vorteil die Erfindung derart weiterzubilden, dass im Falle eines Nichtvorhandenseins,
- der Timer neu gestartet wird,
- der Zähler zurückgesetzt wird,
- die erste Adressinformation als erste dritte Adressinformation übernommen wird, wobei die zumindest eine dritte Adressinformation als zumindest eine weitere dritte Adressinformation übernommen werden.

Hierdurch werden die sukzessiv die Adressinformation wechselnden Verbindungsversuche beginnend mit der Hauptnummer als Weiterleitungsziel erneut durchgeführt, so dass der Anrufer den erfindungsgemäß verwirklichten Dienst solange fortsetzen kann, bis eine der Weiterleitungen zum Erfolg geführt hat oder er die Anrufversuche beendet.

Bei einer bevorzugten Weiterbildung des Verfahrens wird die zentrale Steuerungsfunktion auf einer Nebenstelleneinrichtung ausgeführt, wobei die jeweils zweite Adressinformation der zumindest zweiten Kommunikationsteilnehmer als Grundlage eines der Kontrolle durch die Nebenstelleneinricht-ung unterworfenen Adressraums gebildet wird. Hierdurch wird das erfindungsgemäße Verfahren vorteilhaft in privaten Netzen installiert.

Wird vor Beenden des Anrufs dem Endgerät des Anrufers eine Information für den Anrufer übermittelt und am Endgerät sinnlich wahrnehmbar ausgegeben, so wird eine für den Nutzer des erfindungsgemäß verwirklichten Dienstes eine angenehmere und nachvollziehbare Nutzung geboten und gegebenenfalls weitere Anrufe und somit Ressourcenverschwendung vermieden.

Das erfindungsgemäße Kommunikationssystem zum Aktivieren eines Leistungsmerkmals einer ersten Kommunikationsendeinrichtung zeichnet sich durch Mittel zur Durchführung des Verfahrens in einer der vorgehend genannten Ausprägung aus und trägt somit zu der Verwirklichung der vorstehend genannten Vorteile der jeweiligen Weiterbildung bei.

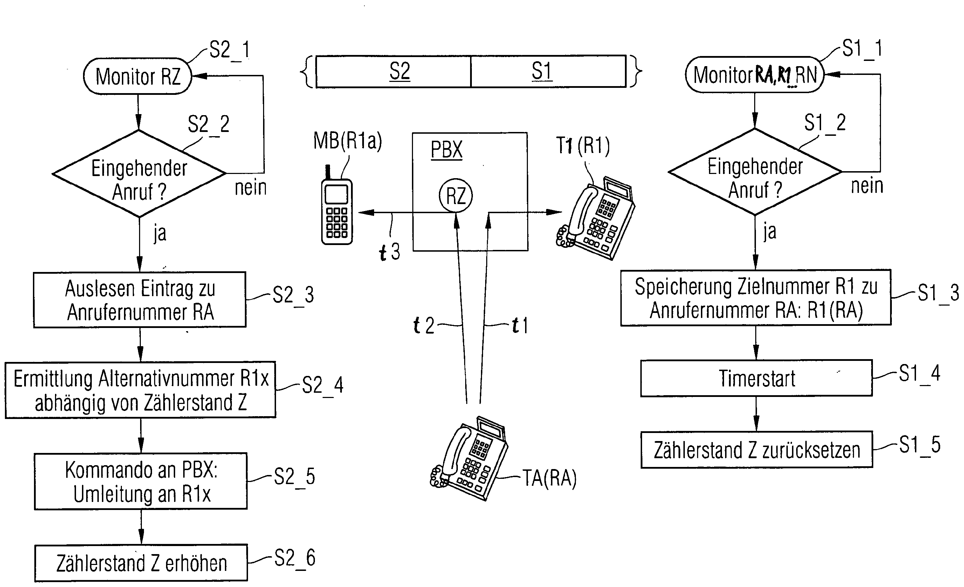

Weitere Vorteile sowie Details der Erfindung werden anhand eines in der einzigen Figur dargestellten Ausführungsbeispiels der Erfindung nachfolgend näher erläutert. Dabei zeigt die
- Figur: eine schematische Darstellung eines Szenarios gemäß dem Kommunikationssystem sowie Ablaufdiagramme einer Variante des erfindungsgemäßen Verfahrens

Die Figur zeigt in schematischer Darstellung ein Kommunikationssystem zur Sprach-Echtzeitkommunikation mit einer als Rechteck dargestellten Vermittlungsanlage PBX und einem, über eine Teilnehmeranschlussleitung SL an die Vermittlungsanlage PBX angekoppelten, ersten Telefon TA mit der Rufnummer RA als erste Kommunikationsendeinrichtung, welche ein erster Nutzer verwendet. Im dargestellten Ausführungsbeispiel ist zudem ein zweites Telefon T1 mit der Rufnummer R1 an der Vermittlungsanlage PBX angekoppelt.

Das Kommunikationssystem stellt somit beispielsweise ein privates Kommunikationsnetz dar, bei dem neben den dargestellten Telefonen TA, T1 mehrere Telefone TA, Tl...TN an die Vermittlungsanlage PBX anschließbar sind.

Entsprechend ist dieser Mehrzahl von Telefonen TA, T1...TN jeweils zumindest eine Rufnummer RA, R1...RN zugeordnet. Weiterhin wird angenommen, dass die Vermittlungsanlage PBX über eine Amtsleitung und über eine oder über eine Kette von Verbindungssteuerungen mit einem Mobiltelefon MB eines Mobilfunknetzes oder einem - nicht dargestellten - dritten Telefon TB eines öffentlichen Kommunikationsnetzes verbunden ist, welche ein zweiter Nutzer als Alternative zu dem zweiten Telefon T1, welches ihm im privaten Netz zugeordnet ist, nutzt.

Eine nicht dargestellte Basisstation kann über eine im Rahmen des Ausführungsbeispiels eine nicht dargestellte und daher nicht detaillierter spezifizierte Sprachverbindungsleitung an eine öffentliche Vermittlungsstelle gekoppelt sein. Zur Übermittlung von Text- und Multimedianachrichten von Mobilfunkendgeräten kann weiterhin vereinfacht eine Kopplung der Basisstation über eine Datenverbindungsleitung an ein Datennetz vorgesehen sein.

Die Amtsleitung sowie die Mobilfunkverbindung MV zeichnen sich im vorliegenden Ausführungsbeispiel dadurch aus, dass sie über CLIP Rufnummerninformationen eines sendenden Teilnehmers übermitteln können.

Die Vermittlungsanlage PBX ist Teil einer erfindungsgemäßen, Verbindungssteuerung VS, die weiterhin ein SMS-Gateway SMSGW, eine CTI-Applikation (CTI: Computer Telephony Integration), einen Directory-Service LDAP, sowie eine Vermittlungsanlagen-Datenbank der Vermittlungsanlage PBX umfassen kann. Hierbei besitzt der SMS-Gateway eine Kopplung über das vorstehend genannte Datennetz und die vorstehend genannte Datenverbindungsleitung DV an die Basisstation, sowie eine Kopplung über eine weitere Datenverbindungsleitung zur CTI-Applikation. Diese ist wiederum über eine CTI-Schnittstelle an die Vermittlungsanlage PBX gekoppelt und über eine weitere Datenverbindungsleitung zum Directory-Service.

Das erste Telefon TA als erfindungsgemäße erste Kommunikationsendeinrichtung ist über die Teilnehmeranschlussleitung SL an die Vermittlungsanlage PBX gekoppelt und wird über diese gesteuert. Dem ersten Telefon TA ist wie oben erläutert die erste Rufnummer RA zugeordnet, während dem zweiten Telefon T1 eine zweite Rufnummer R1 zugeordnet ist und dem Mobiltelefon MB eine dritte Rufnummer R1a zugeordnet ist. Ferner ist der Vermittlungsanlage erfindungsgemäß eine zentrale Rufnummer RZ zugeordnet.

Die beschriebene Anordnung liegt dem erfindungsgemäßen Verfahren zugrunde, welches anhand eines beispielhaften Ablaufs näher erläutert werden sollt. Dieser beginnt zu einem ersten Zeitpunkt t1 mit einem vom ersten Telefon TA ausgehenden und an das zweite Telefon T1 gerichteten Anruf. Da gemäß dem beispielhaften Szenario der Teilnehmer, der durch den Anruf erreicht werden sollte, abwesend ist, bleibt dieser Anruf unbeantwortet oder es erfolgt eine Aufforderung zur Abgabe einer Nachricht auf eine Voice-Mailbox des Teilnehmers.

Diese Abwicklung des Anrufs wird in der Regel ausreichen, allerdings ist für besonders dringende Anrufe, die einen sofortigen bzw. zeitnahen Kontakt mit dem gewünschten Teilnehmer erfordern eine unbefriedigende Lösung.

Die Erfindung bietet daher eine Lösung an, in dem der Anrufer nach dem zum ersten Zeitpunkt t1 erfolglosen Anruf des zweiten Telefons T1 den Teilnehmer dadurch erreichen kann, dass er zu einem dem ersten Zeitpunkt t1 folgenden zweiten Zeitpunkt t2 die zentrale Rufnummer RZ anruft, welche dann erfindungsgemäß erkennt, dass der dem zweiten Telefon T1 zugeordnete Teilnehmer versucht wird zu erreichen und den Anruf zu einem unmittelbar folgenden dritten Zeitpunkt t3 zu einer dem System hinterlegten alternativen Rufnummer des Teilnehmers weiterleitet.

Im vorliegenden Beispiel handelt es sich dabei um die dritte Rufnummer R1a des Mobilteils MB des nicht erreichten Teilnehmers. Erfindungsgemäß könnte es sich aber auch um die Rufnummer des nicht dargestellten vierten Telefons TB sein, welches beispielsweise nicht an die Vermittlungsanlage PBX angeschlossen ist, sondern ein über das öffentliche Netz erreichbare Telefon sein kann. Dies kann der private Anschluss des am Arbeitsplatz über Vermittlungsanlage PBX nicht zu erreichenden Teilnehmers sein.

Damit diese Funktionalität gewährleistet wird, ist gemäß dem Ausführungsbeispiel der Erfindung ein, im Hintergrund parallel zu den für die gewöhnliche Kommunikation erforderlichen Prozessen laufender, insbesondere unterbrechungsgesteuerter (Interrupt-) gesteuerter, erster Prozess S1 implementiert sowie ein zweiter ebenfalls im Hintergrund per Interrupt gesteuerter parallel laufender zweiter Prozess S2 implementiert.

Der erste Prozess S1 sowie der zweite Prozess S2 erfüllen während ihrer aktiven Zeit im Hintergrund eine Monitorfunktion des Eingangs von Anrufen zu einer bzw. mehreren ihnen bekanntgegebenen Rufnummern, welche die Vermittlungsanlage zur Verfügung hat bzw. ihr zugeordnet ist.

Der erste Prozess S1 beobachtet dabei in einem ersten Schritt S1_1 gemäß dem Ausführungsbeispiel alle den an der Vermittlungsanlage angeschlossenen Telefonen TA, Tl...TN zugeordneten Rufnummern RA, R1...RN. Alternativ die für die erfindungsgemäße Funktion bei der Vermittlungsanlage PBX angemeldeten Telefone respektive deren Rufnummern.

In einem zweiten Schritt S1_2 wird dabei für das (Beobachten) Monitoring in einer Art Endlosschleife überprüft, ob ein Anruf für die beobachteten Rufnummern eingeht.

Ist dies der Fall, erfolgt in einem dritten Schritt S1_3 die Speicherung Zielrufnummer, gemäß Szenario ist dies die zweite Rufnummer R1, zugeordnet zur, der mittels CLIP ermittelten, Rufnummer RA des Anrufers bzw. des ersten Telefons TA. Ferner erfolgt im zweiten Schritt S1_2 oder alternativ erst zum dritten Schritt S1_3 bzw. jeweils unmittelbar im Anschluss in einem vierten Schritt S1_4 der Start eines Timers. Die Zeit des Timers kann dabei fest voreingestellt oder ein- bzw. vorgebbar sein. In der Regel wird dabei der Wert einer voreingestellten Zeit beispielsweise durch Simulationen oder im Versuch im Hinblick auf eine optimale Realisierung bzw. Wirkung des erfindungsgemäßen Verfahrens ermittelt werden. Ferner ist dem erfindungsgemäßen Beispiel folgend für jede der (angemeldeten) Rufnummern RA, R1...RN ein Timer vorgesehen, da bei Ablauf des Timers die zu der jeweiligen Rufnummer RA, R1...RN gespeicherten vergeblichen Anrufsversuche gelöscht werden und so die separate Überwachung der einzelnen Rufnummern RA, R1...RN gewährleistet wird.

Ruft nun der erste Teilnehmer die zentrale Rufnummer RZ innerhalb des Zeitfensters, d.h. der zweite Zeitpunkt t2 tritt ein bevor der Timer abgelaufen ist, an, so wird seitens des zweiten Prozesses S2 die erste Rufnummer RA erfasst und überprüft, ob durch den ersten Prozess S1 für diese Rufnummer eine Zuordnungsinformation zu einer zu einem vergeblichen Versuch gehörenden Rufnummer R1...RN gespeichert ist. Im dargestellten Szenario also, ob die zweite Rufnummer R1 von einem Endgerät mit der ersten Rufnummer RA angerufen und daher eine Zuordnungsinformation R1(RA) gespeichert ist.

Ist dies der Fall überprüft der zweite Prozess S2, ob für die erste Rufnummer R1 eine alternative Rufnummer angegeben worden ist. Dies ist gemäß dem dargestellten Szenario durch dem Mobilteil MB zugeordnete Mobilnummer R1a gegeben, so dass gemäß dem Ausführungsbeispiel der Erfindung der Anruf, der die zentrale Rufnummer RZ seitens des ersten Endgerätes TA erreichte an die alternative Nummer R1a zum dritten Zeitpunkt t3 weitergeleitet wird.

Die Erfindung ermöglicht also ohne Kenntnis der alternativen Rufnummer, lediglich durch Anrufen einer speziellen im System als solche bekannten Nummer, den gewünschten Teilnehmer an seinem Zweit- oder Drittendgerät zu erreichen.

Damit der zweite Prozess auch ohne an den Anrufer gerichtete Rückfrage das Ziel automatisch ermitteln kann, ist gemäß dem Ausführungsbeispiel vorgesehen, dass nur jeweils die letzte der angemeldeten nicht erreichten Rufnummern RA, R1...RN je Quelle gespeichert wird. D.h. falls vom ersten Telefon TA ein nicht dargestelltes viertes an der Vermittlungsanlage gemeldetes Telefon T2 nach dem ersten Zeitpunkt t1 angerufen würde, würde die Zuordnung unabhängig vom Ablauf des durch den ersten Prozess für die erste Rufnummer R1 gesetzten Timers gelöscht und statt dessen für die Rufnummer des vierten Telefons T2 eine Zuordnung R2(RA) gespeichert werden. Hierdurch wird erreicht, dass es eine eineindeutige Zuordnung von Anruferquelle zu wichtigem Ziel gibt.

Alternativ kann dies auch dadurch gewährleistet werden, dass zusätzlich zur Zuordnung eine (weitere) die Zuordnung kennzeichnende Größe wie beispielsweise die Anzahl der vom ersten Telefon TA ausgehenden an das zweite Telefon T1 und das vierte Telefon T2 gerichteten vergeblichen Verbindungsversuche gespeichert wird und anhand der (größeren) Anzahl die seitens des zweiten Prozesses S2 durchgeführte Ermittlung des Ziels stattfindet.

Als weitere Ergänzung oder Alternative sind statische, insbesondere die Historie von Anrufen berücksichtigende, Auswertungen, wie Häufigkeit der Anrufe vom ersten Endgerät TA zum zweiten Endgerät T2 oder Zeitpunkte von Anrufen zu bestimmten Rufnummern, möglich und in Abhängigkeit der verfügbaren Ressourcen sinnvoll einsetzbar.

Mit dem Start des Timers wird in einem fünften Schritt S1_5 auch ein Zähler, welcher für die erfindungsgemäße Erfassung von Verbindungsversuchen zu einer der Rufnummern R1...RN von der selben Quelle innerhalb eines durch den Timerwert festgelegten Zeitfensters zuständig ist, zurückgesetzt, wobei dies nicht unbedingt ein Rücksetzen auf den Wert "null" bedeuten muss, sondern bereits den ersten dieses Rücksetzen auslösenden Verbindungsversuch berücksichtigend, auch auf den Wert "eins" gesetzt werden kann.

Der erste Prozess S1 führt die organisierte Speicherung dabei derart durch, dass je anrufender Nummer RA nur die letzte von ihm gerufene Rufnummer R1...RN gespeichert wird und löscht diese Zuordnung nach Ablauf des im vierten Schritt S1_4 gestarteten Timers.

Der zweite Prozess S2 ist für die Überwachung der zentralen Rufnummer RZ zuständig, wobei dieser Prozess wie bereits erläutert parallel zum ersten Prozess S1 abläuft und mit diesem in erfindungsgemäßer Weise zusammenwirkt.

Dies erfolgt ausgehend von einem Anfangszustand im sechsten Schritt S2_1 dadurch, dass in einem siebten Schritt S2_2 in einer Art Endlosschleife geprüft wird, ob ein Anruf zur zentralen Rufnummer RZ eingegangen ist, wobei für den Fall, dass dies bejaht werden kann, in einem achten Schritt S2_3 ein Auslesen eines etwaigen durch den ersten Prozess S1 gespeicherten Eintrags zu dem Szenario der angenommenen Anrufernummer RA erfolgt.

Ist kein Eintrag vorhanden, weil vom ersten Telefon TA kein durch den ersten Prozess S1 überwachter Teilnehmer angerufen oder der durch den ersten Prozess gesetzte Timer abgelaufen und somit ein bereits bestehender Eintrag gelöscht worden ist, wird der Anruf einfach beendet. Alternativ bzw. ergänzend wird dem Anrufer vorab noch dies mit einer Ansage angekündigt.

Ist allerdings ein Eintrag vorhanden, so erfolgt in einem neunten Schritt S2 4 das Absetzen eines Kommandos an die Vermittlungseinrichtung PBX den eingegangenen Anruf in einem zehnten Schritt S2 5 an eine Ersatznummer weiterzuleiten, die sich zum einen aus der gespeicherten Zuordnung R1(RA) ergibt, da dies die zuletzt nicht erreichte Rufnummer festlegt und mit dieser festgelegten nicht erreichten Rufnummer, die für die Rufnummer hinterlegte dritte Rufnummer R1a ermittelbar wird.

Gemäß einem nicht dargestellten Ausführungsbeispiel der Erfindung könnte das erfindungsgemäße Verfahren durch diese Weiterleitung beendet sein. Eine vorteilhafte und auch dargestellte Weiterbildung besteht darin, in dem neunten Schritt S2_4 die hinterlegte Nummer zusätzlich noch abhängig nach dem aktuellen Zählerstand abzufragen, so dass wenn es sich innerhalb einer kurzen, durch den Timer bestimmten Zeit bereits um den zweiten Anruf an die zentrale Rufnummer RZ ausgehend vom ersten Telefon TA handelt, eine etwaige zweite vom Nutzer des zweiten Telefons T1 hinterlegte Ersatznummer als Weiterleitungsziel festgelegt wird, wobei der Zähler solange erhöht wird, wie Ersatznummern, unter denen der Nutzer des zweiten Telefons T1 erreichbar ist, hinterlegt sind.

Im Fall, dass keine weitere Nummer hinterlegt ist, wird der Anruf der zentralen Rufnummer RZ gegebenenfalls mit vorheriger Ansage einfach beendet.

Alternativ wäre auch denkbar, dass erneut mit der ersten Ersatznummer weitergeleitet, d.h. die Ersatznummer durch Anwendung einer Modulo-Division ermittelt, wird.

Durch das erfindungsgemäße Verfahren wird also gewährleistet, dass ein dringend gesuchter Kommunikationsteilnehmer leichter und ohne Kenntnis all seiner Rufnummern erreicht werden kann. Es wird stattdessen lediglich eine seiner Nummern sowie die Kenntnis der zentralen Rufnummer RZ benötigt.

Während die Erfindung im Ausführungsbeispiel anhand von Sprachendgeräten erläutert wurde, kann es sich bei den Kommunikationsendeinrichtungen auch um eine Video- oder Multimediaendeinrichtungen oder um Datenendeinrichtungen wie Faxgeräte handeln. Weiterhin kann es sich bei den Telefonendgeräten auch um Software-Telefonieanwendungen auf einem Arbeitsplatzrechner oder um ein PDA handeln. Weiterhin kann als Kommunikationsverfahren ein leitungsvermitteltes oder ein paketorientiertes Verfahren eingesetzt werden und können die Telefone leitungsvermittelte oder paketorientierte, kabelgebundene oder mobile Endgeräte sein.

Das den Anruf auslösende erste Telefon TA kann allgemein betrachtet an ein öffentliches oder privates Kommunikationsnetz, ein Mobilfunknetz, ein ISDN-Netz, ein öffentliches oder privates Datennetz oder ein Funk-Datennetz gekoppelt sein, sofern dieses eine Verbindung vom zweiten Telefon T1 zum ersten Telefon TA ermöglicht.

Unter Telefonnummer kann daher auch folgerichtig, auch ein VoIP Account, beispielsweise in Form einer Emailadresse, oder andere einen User Agent identifizierende Information verstanden werden.

## Patentansprüche

1. Verfahren zum Bereitstellen einer Kommunikation, mit einer Vielzahl von Kommunikationsteilnehmern (TA, T1...TN), mit mindestens einer ersten einem ersten Kommunikationsteilnehmer (TA) in einem ersten Kommunikationsnetz zugeordneten Adressinformation (RA), einer zweiten zumindest einem zweiten Kommunikationsteilnehmer (T1) in dem ersten Kommunikationsnetz zugeordneten Adressinformation (R1) und mindestens einer dritten Adressinformation (R1a), die dem zumindest einem zweiten Kommunikationsteilnehmer (T1) in einem zweiten Kommunikationsnetz zugeordnet ist, das mit dem ersten Kommunikationsnetz über eine Amtsleitung und über zumindest eine Verbindungssteuerung verbunden ist, sowie einer vierten einer zentralen Steuerungsfunktion in dem ersten Kommunikationsnetz zugeordneten Adressinformation (RZ), **dadurch gekennzeichnet, dass** bei Scheitern eines durch von einem durch die erste Adressinformation (RA) bestimmten Kommunikationsteilnehmer (TA) unter Nutzung der zweiten Adressinformation (R1) initiierten ersten Verbindungsversuchs zum zweiten Kommunikationsteilnehmer (T1) innerhalb des ersten Kommunikationsnetzes, bei einem dem Scheitern folgenden zweiten Verbindungsversuch vom durch die erste Adressinformation (RA) bestimmten ersten Kommunikationsteilnehmer (TA) zur durch die vierte Adressinformation (RZ) bestimmten zentralen Steuerungsfunktion in dem ersten Kommunikationsnetz die erste Adressinformation (RA) erfasst wird und überprüft wird, ob für diese Adressinformation (RA) eine Zuordnungsinformation zu der zu dem ersten vergeblichen Verbindungsversuch gehörenden zweiten Adressinformation (R1) gespeichert ist, und die Steuerungsfunktion eine Weiterleitung der zweiten Verbindung zum zweiten Kommunikationsteilnehmer (T1) unter Nutzung der dritten Adressinformation (R1a) zum zweiten Kommunikationsnetz automatisch initiiert.

2. Verfahren nach dem Anspruch 1, **dadurch gekennzeichnet, dass** nur jeweils die letzte zweite Adressinformation (RA, R1...RN) der nicht erreichten zweiten Kommunikationsteilnehmer (T1) je erster Adressinformation (RA) gespeichert wird.

3. Verfahren nach einem der vorhergehenden Ansprüche, **dadurch gekennzeichnet, dass** die zumindest eine dritte Adressinformation (R1a), insbesondere durch die zentrale Steuerungsfunktion, dem zweiten Kommunikationsteilnehmer (T1) zugeordnet gespeichert wird.

4. Verfahren nach einem der vorhergehenden Ansprüche, **dadurch gekennzeichnet, dass** die zumindest eine dritte Adressinformation (R1a) aus einem Adressverzeichnis entnommen wird.

5. Verfahren nach einem der vorhergehenden Ansprüche, **dadurch gekennzeichnet, dass**
a. mit dem Scheitern des ersten Verbindungsversuchs ein Timer zur Erfassung einer vorbestimmbaren Zeitspanne gestartet wird,
b. bei Ablauf des Timers die erste Information (RA) gelöscht wird.

6. Verfahren nach dem vorhergehenden Anspruch, **dadurch gekennzeichnet, dass** die Zeitspanne des Timers fest voreingestellt oder ein- bzw. vorgegeben wird.

7. Verfahren nach dem vorhergehenden Anspruch, **dadurch gekennzeichnet, dass** der Wert der voreingestellten Zeitspanne durch Simulationen oder im Versuch ermittelt wird.

8. Verfahren nach dem vorhergehenden Anspruch, **dadurch gekennzeichnet, dass** für jede der ersten Adressinformationen (RA, R1...RN) der Timer derart vorgesehen wird, dass die separate Überwachung der einzelnen ersten Adressinformationen (RA, R1...RN) gewährleistet wird.

9. Verfahren nach einem der Ansprüche 5 bis 8, **dadurch gekennzeichnet, dass**
b. bei einem weiteren ersten Verbindungsversuch vor Ablauf des Timers, ein Zähler inkrementiert wird
c. eine Prüfung auf Vorhandensein einer weiteren dritten Adressinformation erfolgt,
d. im Falle des Vorhandenseins einer weiteren dritten Adressinformation ein weiterer zweiter Verbindungsversuch unter Nutzung der weiteren dritten Adressinformation erfolgt.

10. Verfahren nach dem vorhergehenden Anspruch, **dadurch gekennzeichnet, dass** im Falle eines Nichtvorhandenseins der weiteren dritten Adressinformation (R1a) der Anruf beendet wird.

11. Verfahren nach dem vorhergehenden Anspruch, **dadurch gekennzeichnet, dass** im Falle eines Nichtvorhandenseins,
e. der Timer neu gestartet wird,
f. der Zähler zurückgesetzt wird,
g. die zweite Adressinformation (R1) als erste dritte Adressinformation übernommen wird, wobei die zumindest eine dritte Adressinformation (R1a) als zumindest eine weitere dritte Adressinformation übernommen werden.

12. Verfahren nach dem vorhergehenden Anspruch, **dadurch gekennzeichnet, dass** der Zähler einen ersten das Zurücksetzen des Zählers auslösenden Verbindungsversuch berücksichtigend auf den Wert "eins" zurückgesetzt wird.

13. Verfahren nach einem der vorhergehenden Ansprüche, **dadurch gekennzeichnet, dass** die zentrale Steuerungsfunktion auf einer Nebenstelleneinrichtung ausgeführt wird, wobei die jeweils zweite Adressinformation (R1) der zumindest zweiten Kommunikationsteilnehmer (T1) als Grundlage eines der Kontrolle durch die Nebenstelleneinrichtung unterworfenen Adressraums gebildet wird.

14. Verfahren nach einem der vorhergehenden Ansprüche, **dadurch gekennzeichnet, dass** vor Beenden des Anrufs dem Endgerät des Anrufers eine Information für den Anrufer übermittelt und am Endgerät sinnlich wahrnehmbar ausgegeben wird.

15. Kommunikationssystem zum Aktivieren eines Leistungsmerkmals einer ersten Kommunikationsendeinrichtung, **dadurch gekennzeichnet, dass** Mittel zur Durchführung des Verfahrens gemäß einem der vorhergehenden Verfahrensansprüche vorgesehen sind.

## Claims

1. A method for making available a communication, with a plurality of communication subscribers (TA, T1...TN), with at least one first piece of address information (RA) associated with a first communication subscriber (TA) in a first communication network, with a second piece of address information (R1) associated with at least one second communication subscriber (T1) in the first communication network, and with at least one third piece of address information (R1a) which is associated with the at least one second communication subscriber (T1) in a second communication network which is connected to the first communication network via a trunk line and via at least one connection control, as well as with a forth piece of address information (RZ) associated with a central control function in the first communication network, **characterized in that** upon a failure of a first connection attempt to the second communication subscriber (T1) within the first communication network, which attempt was initiated by a communication subscriber (TA) determined by the first piece of address information (RA) using the second piece of address information (R1), upon a second connection attempt, following the failure, by the first communication subscriber (TA) determined by the first piece of address information (RA) to the central control function, determined by the fourth piece of address information (RZ), in the first communication network the first piece of address information (RA) is detected and a check is made whether a piece of association information for the second piece of address information (R1) belonging to the first, failed connection attempt is stored, and the control function automatically initiates a forwarding of the second connection to the second communication subscriber (T1) using the third piece of address information (R1a) to the second communication network.

2. The method according to Claim 1, **characterized in that** only the last second piece of address information (RA, R1...RN) of the not-reached second communication subscriber (T1) is stored for each first piece of address information (RA).

3. The method according to one of the previous claims, **characterized in that** the at least one third piece of address information (R1a) is stored, associated with the second communication subscriber (T1), in particular by the central control function.

4. The method according to one of the previous claims, **characterized in that** the at least one third piece of address information (R1a) is taken from an address register.

5. The method according to one of the previous claims, **characterized in that**
a. a timer for detecting a predetermined time span is started with the failure of the first connection attempt,
b. when the timer expires, the first piece of information (RA) is deleted.

6. The method according to the previous claim, **characterized in that** the time span of the timer is firmly preset or is entered or stipulated.

7. The method according to the previous claim, **characterized in that** the value of the preset time span is determined by simulations or in a test.

8. The method according to the previous claim, **characterized in that** the timer is provided in such a manner for each of the first pieces of address information (RA, R1...RN) that the separate monitoring of the individual first pieces of address information (RA, R1...RN) is ensured.

9. The method according to one of Claims 5 to 8, **characterized in that**
b. a meter is incremented upon another first connection attempt before the expiration of the timer,
c. a check for the presence of another third piece of address information takes place,
d. in the case of the presence of another third piece of address information, another second connection attempt takes place using the other third piece of address information.

10. The method according to the previous claim, **characterized in that** in the case of the absence of the other third piece of address information (R1a), the call is terminated.

11. The method according to the previous claim, **characterized in that** in the case of an absence,
e. the timer is started again,
f. the meter is set back,
g. the second piece of address information (R1) is taken as the first third piece of address information, wherein the at least one third piece of address information (R1a) is taken as at least one other third piece of address information.

12. The method according to the previous claim, **characterized in that** the meter is set back to the value "one", taking into account a first connection attempt initiating the setting back of the meter.

13. The method according to one of the previous claims, **characterized in that** the central control function is carried out on a branch apparatus, wherein the particular second piece of address information (R1) of the at least second communication subscriber (T1) is formed as the basis of an address space subjected to being controlled by the branch apparatus.

14. The method according to one of the previous claims, **characterized in that** a piece of information for the caller is transmitted before the termination of the call to the terminal of the caller and is outputted on the terminal in a manner perceptible by the senses.

15. A communication system for actuating a performance feature of a first communication transmitting apparatus, **characterized in that** means is provided for carrying out the method according to one of the previous method claims.

## Revendications

1. Procédé de fourniture d'une communication, avec une pluralité de correspondants de communication (TA, T1...TN), avec au moins une première information d'adresse (RA) associée à un premier correspondant de communication (TA) dans un premier réseau de communication, avec une deuxième information d'adresse (R1) associée à un au moins un second correspondant de communication (T1) dans le premier réseau de communication et avec au moins une troisième information d'adresse (R1a), qui est associée à l'au moins un second correspondant de communication (T1) dans un second réseau de communication, qui est relié au premier réseau de communication par le biais d'une ligne principale et par le biais d'au moins une commande de liaison, ainsi qu'avec une quatrième information d'adresse (RZ) associée à une fonction de commande centrale dans le premier réseau de communication, **caractérisé en ce que**, en cas d'échec d'une première tentative de liaison, déclenchée par un correspondant de communication (TA) déterminé par la première information d'adresse (RA) à l'aide de la deuxième information d'adresse (R1), vers le second correspondant de communication (T1) à l'intérieur du premier réseau de communication, en cas de seconde tentative de liaison, suivant l'échec par le premier correspondant de communication (TA) déterminé par la première information d'adresse (RA), à la fonction de commande centrale dans le premier réseau de communication déterminée par la quatrième information d'adresse (RZ), la première information d'adresse (RA) est détectée et il est vérifié si, pour cette information d'adresse (RA), il est stocké une information d'association liée à une seconde information d'adresse (R1) appartenant à la première tentative de liaison ayant échoué, et la fonction de commande déclenche automatiquement un transfert de la seconde liaison au second correspondant de communication (T1) à l'aide de la troisième information d'adresse (R1a) vers le second réseau de communication.

2. Procédé selon la revendication 1, **caractérisé en ce qu'**uniquement chaque dernière seconde information d'adresse (RA, R1...RN) des seconds correspondants de communication (T1) non joignables de chaque première information d'adresse (RA) est stockée.

3. Procédé selon l'une quelconque des revendications précédentes, **caractérisé en ce que** l'au moins une troisième information d'adresse (R1a), est stockée, en particulier par la fonction de commande centrale, en association au second correspondant de communication (T1).

4. Procédé selon l'une quelconque des revendications précédentes, **caractérisé en ce que** l'au moins une troisième information d'adresse (R1a) est prélevée d'un répertoire d'adresses.

5. Procédé selon l'une quelconque des revendications précédentes, **caractérisé en ce que**
a. avec l'échec de la première tentative de liaison est démarré un temporisateur pour détecter un laps de temps pouvant être prédéterminé,
b. à l'expiration du temporisateur, la première information (RA) est effacée.

6. Procédé selon l'une quelconque des revendications précédentes, **caractérisé en ce que** le laps de temps du temporisateur est préréglé de manière fixe ou est entré ou prédéfini.

7. Procédé selon l'une quelconque des revendications précédentes, **caractérisé en ce que** la valeur du laps de temps préréglé est établie par des simulations ou au cours de la tentative.

8. Procédé selon l'une quelconque des revendications précédentes, **caractérisé en ce que**, pour chacune des premières informations d'adresse (RA, R1...RN), le temporisateur est prévu de manière que la surveillance distincte des différentes premières informations d'adresse (RA, R1...RN) est assurée.

9. Procédé selon l'une quelconque des revendications 5 à 8, **caractérisé en ce que**
b. lors d'une autre première tentative de liaison avant l'expiration du temporisateur, un compteur est incrémenté
c. une vérification de présence d'une autre troisième information d'adresse est effectuée,
d. dans le cas de la présence d'une autre troisième information d'adresse, une autre seconde tentative de liaison est effectuée à l'aide de l'autre troisième information d'adresse.

10. Procédé selon l'une quelconque des revendications précédentes, **caractérisé en ce que**, dans le cas d'une non-présence de l'autre troisième information d'adresse (R1a), il est mis fin à l'appel.

11. Procédé selon l'une quelconque des revendications précédentes, **caractérisé en ce que**, dans le cas d'une non-présence,
e. le temporisateur est redémarré,
f. le compteur est réinitialisé,
g. la deuxième information d'adresse (R1) est prise en tant que troisième information d'adresse, dans lequel l'au moins une troisième information d'adresse (R1a) est prise en tant qu'au moins une autre troisième information d'adresse.

12. Procédé selon l'une quelconque des revendications précédentes, **caractérisé en ce que** le compteur est réinitialisé à la valeur « un » en tenant compte d'une première tentative de liaison déclenchée par la réinitialisation du compteur.

13. Procédé selon l'une quelconque des revendications précédentes, **caractérisé en ce que** la fonction de commande centrale est exécutée sur un dispositif secondaire, dans lequel chaque deuxième information d'adresse (R1) des au moins seconds correspondants de communication (T1) est formée en tant que base d'un espace d'adresses soumis à la commande par le dispositif secondaire.

14. Procédé selon l'une quelconque des revendications précédentes, **caractérisé en ce que**, avant la fin de l'appel, une information est communiquée à l'appareil terminal de l'appelant et est émise au niveau de l'appareil terminal d'une manière sensoriellement perceptible.

15. Système de communication pour l'activation d'une caractéristique de puissance d'un premier dispositif terminal de communication,
**caractérisé en ce que** sont prévus des moyens pour l'exécution du procédé selon l'une quelconque des revendications de procédé précédentes.
